# DEMANDE DE BREVET EUROPEEN

(11) **EP 4 459 601 A1**
(43) Date de publication de la demande: **06.11.2024**
(21) Numéro de dépôt: 24173208.0
(22) Date de dépôt: 29.04.2024
(51) Int. Cl.: G09B 23/28, G09B 19/00

(54) **UNITE MOBILE DE TRAVAUX PRATIQUES POUR L'ENSEIGNEMENT NOMADE DE TECHNIQUES MEDICALES, DENTAIRES OU PARAMEDICALES**

(30) Priorité: 02.05.2023 FR 2304398
(71) Demandeur: Continuum, 13100 Aix-en-Provence (FR)
(72) Inventeur: PARIS, Jean-Christophe, 83270 SAINT CYR SUR MER (FR)
(74) Mandataire: Cabinet Beau de Loménie

(57) **Abrégé**

L'invention concerne une unité mobile (2) de travaux pratiques pour l'enseignement nomade de techniques médicales, dentaires ou paramédicales, comprenant au moins un chariot à roulettes (4) sur lequel sont montés quatre postes de travail (6) individuels et identiques, chaque poste de travail comprenant une unité informatique (10) autonome avec écran (12), un système de réseau sans fil relié à l'unité informatique pour recevoir un contenu d'enseignement et au moins une machine pneumatique (14).

## Description

### Domaine Technique

La présente invention se rapporte au domaine général de l'enseignement nomade de techniques médicales, dentaires ou paramédicales. Elle concerne plus précisément une unité mobile permettant de réaliser des travaux pratiques dans des conditions proches du réel et un enseignement autonome et nomade de techniques médicales, dentaires ou paramédicales.

### Technique antérieure

L'enseignement à distance de certaines techniques médicales, dentaires ou paramédicales à des professionnels de santé, notamment à des stagiaires, nécessite des postes de travail individuels. Ces postes de travail sont typiquement pourvus d'un certain nombre d'équipements, tels que notamment : une unité informatique avec écran pour recevoir et visualiser le contenu de l'enseignement et une ou plusieurs machines pneumatiques alimentées en air comprimé pour mettre en pratique les techniques enseignées.

Le problème principal des postes de travail connus de l'art antérieur est qu'ils sont non autonomes en air comprimé, ce qui ne permet pas aux stagiaires de se trouver dans de véritables conditions de pratique professionnelle. L'enseignement s'en trouve donc dégradé.

### Exposé de l'invention

L'invention a donc pour objet de proposer une unité mobile et autonome pour la réalisation de travaux pratiques.

Conformément à l'invention, ce but est atteint grâce à une unité mobile de travaux pratiques pour l'enseignement nomade de techniques médicales, dentaires ou paramédicales, comprenant au moins un chariot à roulettes sur lequel sont montés quatre postes de travail individuels et identiques, chaque poste de travail comprenant une unité informatique autonome avec écran, un système de réseau sans fil relié à l'unité informatique pour recevoir un contenu d'enseignement et au moins une machine pneumatique.

L'unité selon l'invention est remarquable en ce qu'elle prévoit une alimentation autonome en air comprimé des machines pneumatiques de chaque poste de travail, ce qui permet aux stagiaires de se retrouver dans des conditions proches de leur exercice professionnel. Couplées aux unités informatiques également autonomes, ces machines pneumatiques permettent ainsi la diffusion d'un enseignement à distance destiné aux professionnels de santé éloignés de toute structure d'apprentissage traditionnel.

De préférence, les machines pneumatiques des postes de travail sont reliées chacune à au moins un même compresseur à air qui est couplé à au moins un réservoir d'air comprimé commun, le compresseur à air et le réservoir d'air comprimé étant logés dans une même armoire à énergie.

Dans ce cas, les machines pneumatiques des postes de travail peuvent être reliées au réservoir d'air comprimé par l'intermédiaire de tuyaux à air comprimé qui peuvent être enroulés sur des enrouleurs montés dans l'armoire à énergie.

L'armoire à énergie est avantageusement montée sur roulettes pour la rendre mobile.

De préférence également, laquelle les quatre postes de travail sont séparés les uns des autres par des cloisons latérales.

De préférence encore, les quatre postes de travail sont chacun équipés d'un plan de travail rabattable.

Les quatre postes de travail peuvent être chacun équipés d'un simulateur physique.

### Brève description des dessins

[Fig. 1] La figure 1 est une vue en perspective d'une unité mobile de travaux pratiques selon l'invention.
[Fig. 2] La figure 2 représente un exemple de compresseur relié aux machines pneumatiques de l'unité mobile selon l'invention.

### Description des modes de réalisation

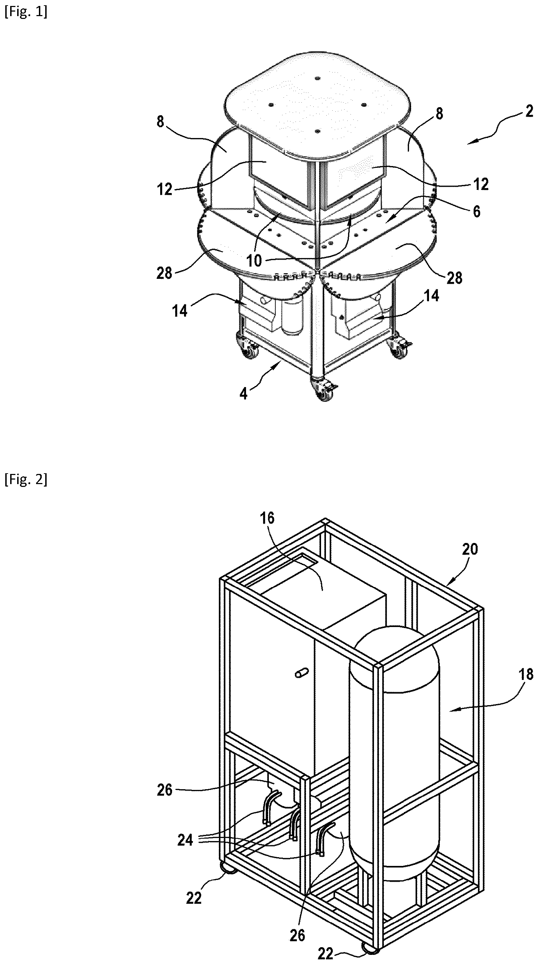

L'invention concerne une unité mobile de travaux pratiques 2 telle qu'illustrée par la figure 1. Typiquement, une telle unité 2 est utilisée pour l'enseignement nomade de techniques médicales, dentaires ou paramédicales. L'utilisateur visé est généralement un groupe de professionnels de santé éloignés de toute structure d'apprentissage traditionnel, tels que par exemple des stagiaires.

Conformément à l'invention, cette unité 2 comprend notamment un chariot à roulettes 4 sur lequel sont montés quatre postes de travail 6 individuels et identiques (seuls deux postes de travail sont visibles sur la figure 1).

Chaque poste de travail 6 s'étend sur 90° et est délimité latéralement par deux cloisons 8 latérales. Dans cet espace, sont positionnés une unité informatique 10 qui est autonome et équipée d'un écran 12, un système de réseau sans fil (non représenté sur les figures) qui est relié à l'unité informatique afin de recevoir un contenu d'enseignement, et au moins une machine pneumatique 14.

A titre d'exemples, la machine pneumatique 14 est alimentée notamment en air comprimé et permet à l'utilisateur de mettre en pratique les techniques enseignées. Il peut s'agir par exemple d'un unit dentaire.

A cet effet, les machines pneumatiques 14 des quatre postes de travail 6 sont reliées chacune à au moins un même compresseur à air 16 qui est lui-même couplé à au moins un réservoir d'air comprimé commun 18.

Plus précisément, comme représenté sur la figure 2, le compresseur à air 16 et le réservoir d'air comprimé 18 sont logés à l'intérieur d'une même armoire à énergie 20, cette dernière étant également montée sur roulettes 22 pour la rendre aisément mobile.

Typiquement, compte-tenu des machines pneumatiques utilisées et de leurs utilisations, on pourra choisir un compresseur à air 16 de type électrique de puissance nominale 3 HP et délivrant 300 litres/mn. Quant au réservoir d'air comprimé 18, il peut posséder une contenance de 270 litres.

Par ailleurs, comme représenté également sur la figure 2, les machines pneumatiques des postes de travail sont reliées au réservoir d'air comprimé 18 par l'intermédiaire de tuyaux à air comprimé 24 qui peuvent être enroulés sur des enrouleurs 26 logés à l'intérieur de l'armoire à énergie 20.

L'armoire à énergie 20 est typiquement munie de panneaux (non représentés sur la figure 2) dont l'un au moins est une porte à verrou pour accéder notamment aux enrouleurs 26 et au moins une autre comprend une aération pour le compresseur à air.

On notera que l'unité 2 selon l'invention peut comporter une pluralité de chariots à roulettes 4 tels que décrits précédemment (c'est-à-dire sur lesquels sont montés quatre postes de travail individuels et identiques), l'alimentation en air comprimé de l'ensemble des postes de travail étant réalisée à l'aide d'une ou plusieurs armoires à énergie 20 telle que décrite précédemment.

Par exemple, l'unité pourra se composer de cinq chariots à roulettes dotés chacun de quatre postes de travail individuels, l'ensemble de ces vingt postes de travail étant alimenté par deux compresseurs à air travaillant en parallèle et pouvant être logés dans une même armoire à énergie.

On notera que, pour des raisons de compacité et de rangement, les quatre postes de travail 6 sont chacun avantageusement équipés d'un plan de travail 28 horizontal qui est rabattable (sur la figure 1, les plans de travail 28 sont en position déployée afin d'agrandir la surface de travail pour les utilisateurs.

On notera encore que les quatre postes de travail 6 peuvent être chacun équipés d'un simulateur physique (non représenté sur les figures), encore appelé « tête fantôme ». Ce simulateur est une unité de simulation dentaire représentant une tête avec des arcades dentaires et des joues et qui est généralement pourvu d'un système d'évacuation par gravitation.

## Revendications

1. Unité mobile (2) de travaux pratiques pour l'enseignement nomade de techniques médicales, dentaires ou paramédicales, comprenant au moins un chariot à roulettes (4) sur lequel sont montés quatre postes de travail (6) individuels et identiques, chaque poste de travail s'étendant sur 90° en étant délimité latéralement par deux cloisons latérales (8) et comprenant une unité informatique (10) autonome avec écran (12), un système de réseau sans fil relié à l'unité informatique pour recevoir un contenu d'enseignement et au moins une machine pneumatique (14), les machines pneumatiques (14) étant reliées chacune à au moins un même compresseur à air (16) qui est couplé à au moins un réservoir d'air comprimé (18) commun.

2. Unité selon la revendication 1, dans laquelle le compresseur à air et le réservoir d'air comprimé sont logés dans une même armoire à énergie (20).

3. Unité selon la revendication 2, dans lequel les machines pneumatiques (14) des postes de travail (6) sont reliées au réservoir d'air comprimé (18) par l'intermédiaire de tuyaux à air comprimé (24) qui peuvent être enroulés sur des enrouleurs (26) montés dans l'armoire à énergie (20).

4. Unité selon l'une des revendications 2 et 3, dans laquelle l'armoire à énergie (20) est montée sur roulettes (22) pour la rendre mobile.

5. Unité selon l'une quelconque des revendications 1 à 4, dans laquelle les quatre postes de travail (6) sont chacun équipés d'un plan de travail (28) rabattable.

6. Unité selon l'une quelconque des revendications 1 à 4, dans laquelle les quatre postes de travail (6) sont chacun équipés d'un simulateur physique.
